(19) Europäisches Patentamt
European Patent Office
Office européen des brevets

(11) **EP 4 656 678 A1**

(12) **EUROPEAN PATENT APPLICATION**
published in accordance with Art. 153(4) EPC

(43) Date of publication:
**03.12.2025 Bulletin 2025/49**

(21) Application number: 24770680.7

(22) Date of filing: 07.03.2024

(51) International Patent Classification (IPC):
*C08L 9/00* (2006.01)    *B60C 1/00* (2006.01)
*C08K 3/36* (2006.01)    *C08L 7/00* (2006.01)
*C08L 57/02* (2006.01)    *C08L 101/02* (2006.01)

(52) Cooperative Patent Classification (CPC):
**B60C 1/00; C08K 3/36; C08K 5/103; C08L 7/00;**
**C08L 9/00; C08L 57/02; C08L 101/02;** Y02T 10/86

(86) International application number:
**PCT/JP2024/008634**

(87) International publication number:
**WO 2024/190574 (19.09.2024 Gazette 2024/38)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: 10.03.2023 JP 2023037146

(71) Applicant: **The Yokohama Rubber Co., Ltd.**
**Hiratsuka-shi, Kanagawa 254-8601 (JP)**

(72) Inventor: **MAEDA, Ryoji**
**Hiratsuka-shi, Kanagawa 254-8601 (JP)**

(74) Representative: **Dilg, Haeusler, Schindelmann**
**Patentanwaltsgesellschaft mbH**
**Leonrodstraße 58**
**80636 München (DE)**

(54) **TIRE RUBBER COMPOSITION**

(57)    There is provided a rubber composition for a tire in which maintained and improved wear resistance, wet performance, and low rolling resistance are achieved in a highly balanced manner. A rubber composition for a tire is obtained by blending 50 parts by mass or more and 150 parts by mass or less of silica and 16 parts by mass or more and 200 parts by mass or less of a thermoplastic resin per 100 parts by mass of a diene-based rubber containing 50 mass% or more of an isoprene-based rubber, in which the thermoplastic resin is composed of an aliphatic monomer-derived unit and/or an aromatic monomer-derived unit, and the thermoplastic resin has an aromatic proton content proportion of 0% or more and less than 5%, a softening point of 80°C or higher and 160°C or lower, and a number average molecular weight Mn of 1100 or less.

FIG. 1

EP 4 656 678 A1

## Description

Technical Field

The present invention relates to a rubber composition for a tire that is mainly used for a tread portion of a tire for a passenger vehicle.

Background Art

In the related art, as a rubber composition for a tire that is used for a tread portion of a tire for a passenger vehicle, a blend that contains a styrene-butadiene rubber (SBR) as a main component is adopted. However, in recent years, from the viewpoint of environmental protection, studies have been conducted to adopt a blend containing a natural rubber (NR) as a main component (for example, see Patent Document 1). That is, the styrene-butadiene rubber (synthetic rubber), which has been used in the related art, is not suitably used as a reclaimed rubber, but switching the styrene-butadiene rubber to a natural rubber which is a regenerable material can increase a ratio of regenerable raw materials or recycled raw materials in a tire (rubber composition) thereby reducing the environmental load.

However, there is a concern that simply replacing the styrene-butadiene rubber with the natural rubber may fail to achieve the performance required as the tread portion of a tire for a passenger vehicle. For example, the natural rubber tends to have a lower glass transition temperature than that of the styrene-butadiene rubber, and compatibility with other polymers or compounding agents is different. Thus, switching to a rubber composition containing the natural rubber as a main component affects the performance required for a tread rubber, such as wear resistance, wet performance, and low rolling resistance, which is a problem.

Citation List

Patent Literature

Patent Document 1: JP 6092986 B

Summary of Invention

Technical Problem

An object of the present invention is to provide a rubber composition for a tire in which wear resistance, wet performance, and low rolling resistance are maintained and improved, and improved wet performance and low rolling resistance are achieved in a highly balanced manner.

Solution to Problem

A rubber composition for a tire according to an embodiment of the present invention that achieves the above object is a rubber composition for a tire obtained by blending 50 parts by mass or more and 150 parts by mass or less of silica and 16 parts by mass or more and 200 parts by mass or less of a thermoplastic resin with respect to 100 parts by mass of a diene-based rubber containing 50 mass% or more of an isoprene-based rubber, the thermoplastic resin being composed of a unit derived from an aliphatic monomer and/or a unit derived from an aromatic monomer, and the thermoplastic resin having an aromatic proton content proportion of 0% or more and less than 5%, a softening point of 80°C or higher and 160°C or lower, and a number average molecular weight Mn of 1100 or less.

Advantageous Effects of Invention

The rubber composition for a tire according to an embodiment of the present invention is obtained by blending a thermoplastic resin having the above-described properties to a diene-based rubber mainly composed of an isoprene-based rubber, and thus can improve compatibility between the isoprene-based rubber and the thermoplastic resin and maintain and improve wear resistance, wet performance, and low rolling resistance to or beyond the levels in the related art. In particular, when the aromatic proton content proportion of the thermoplastic resin composed of a unit derived from an aliphatic monomer and/or a unit derived from an aromatic monomer is set to 0% or more and less than 5%, compatibility with the isoprene-based rubber is improved, and the balance between wear resistance and low rolling resistance can be improved.

The isoprene-based rubber is preferably a natural rubber. In addition, a difference ($Tg_B$ - $Tg_A$) between a glass transition temperature $Tg_A$ of the diene-based rubber and a glass transition temperature $Tg_B$ of the thermoplastic resin is preferably 120°C or higher and 200°C or lower.

The rubber composition for a tire preferably contains a glycerol monofatty acid ester derived from a fatty acid having 8 to 24 carbon atoms, and this can improve dispersibility of silica and make low rolling resistance further excellent.

The thermoplastic resin is preferably at least one selected from the group consisting of a hydrogenated C9-based petroleum resin, a hydrogenated C5/C9-based petroleum resin, a hydrogenated dicyclopentadiene-based resin, and a hydrogenated C9/dicyclopentadiene-based resin.

The rubber composition for a tire can contain, in addition to the thermoplastic resin, an additional thermoplastic resin different from the thermoplastic resin, and a weighted average of an aromatic proton content proportion of the thermoplastic resin and an aromatic proton content proportion of the additional thermoplastic resin is preferably more than 0% and less than 5%.

Brief Description of Drawings

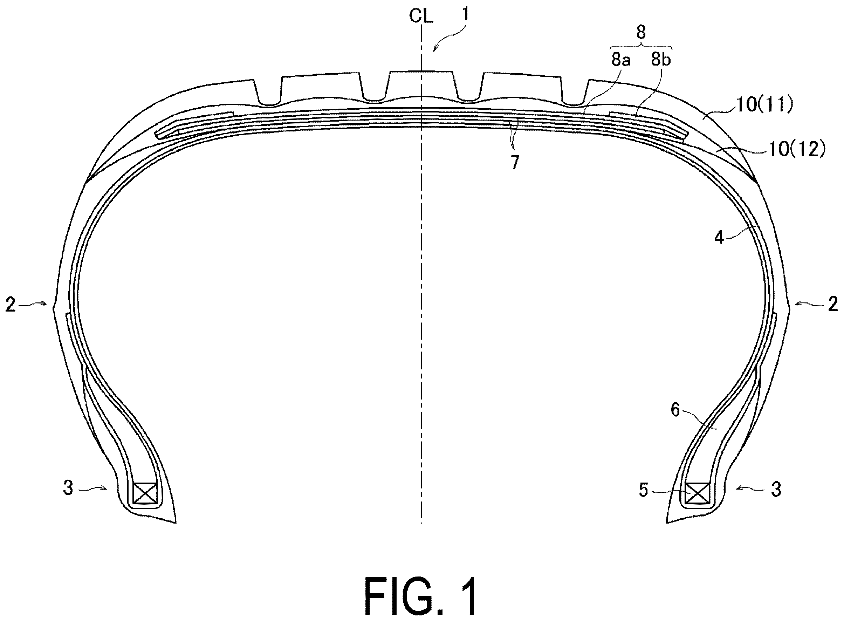

FIG. 1 is a meridian cross-sectional view illustrating an example of a pneumatic tire using a rubber composition for a tire according to an embodiment of the present invention.

Description of Embodiments

Configurations of embodiments of the present invention will be described in detail below with reference to the accompanying drawings.

As illustrated in FIG. 1, a pneumatic tire using a rubber composition for a tire according to an embodiment of the present invention includes a tread portion 1, a pair of sidewall portions 2 respectively disposed on both sides of the tread portion 1, and a pair of bead portions 3 each disposed on an inner side of the pair of sidewall portions 2 in a tire radial direction. The reference sign "CL" in FIG. 1 denotes a tire equator. Although not illustrated in FIG. 1, which is a meridian cross-sectional view, the tread portion 1, the sidewall portions 2, and the bead portions 3 each extend in a tire circumferential direction and form an annular shape. This forms a toroidal basic structure of the pneumatic tire. Hereinafter, although the description using FIG. 1 is basically based on the illustrated meridian cross-sectional shape, all of the tire components extend in the tire circumferential direction and form an annular shape.

A carcass layer 4 is mounted between a pair of left and right bead portions 3. This carcass layer 4 includes a plurality of reinforcing cords extending in the tire radial direction, and is folded back from a vehicle inner side to a vehicle outer side around a bead core 5 disposed in each bead portion 3. A bead filler 6 is disposed on a periphery of the bead core 5, and the bead filler 6 is enveloped by a body portion and a folded back portion of the carcass layer 4. Meanwhile, in the tread portion 1, a plurality of belt layers 7 (two layers in FIG. 1) are embedded on an outer circumferential side of the carcass layer 4. Each of the belt layers 7 includes a plurality of reinforcing cords inclining with respect to the tire circumferential direction and is disposed such that the reinforcing cords intersect each other between the layers. In these belt layers 7, the inclination angle of the reinforcing cords with respect to the tire circumferential direction is set in a range of, for example, from 10° to 40°. Moreover, a belt reinforcing layer 8 (two layers including a full cover 8a covering the entire width of the belt layer 7 and an edge cover 8b locally covering an end of the belt layer 7) is provided on an outer circumferential side of the belt layer 7. The belt reinforcing layer 8 includes organic fiber cords oriented in the tire circumferential direction. In the belt reinforcing layer 8, the angle with respect to the tire circumferential direction in the organic fiber cord is set to from 0° to 5°, for example.

A tread rubber layer 10 is disposed on the outer circumferential side of the carcass layer 4 in the tread portion 1, and the tread rubber layer 10 has a structure in which two types of rubber layers having different physical properties (a cap tread 11 constituting a road contact surface of the tread portion 1 and an undertread 12 disposed on an inner circumferential side of the cap tread 11) are stacked in the tire radial direction. The rubber composition for a tire according to an embodiment of the present invention is mainly used for the cap tread 11 of such a tire.

The tire in which the rubber composition for a tire according to an embodiment of the present invention is used is preferably a pneumatic tire (a tire inflated with the air, an inert gas such as nitrogen, or another gas in its inner portion) as described above, but may also be a non-pneumatic tire. Also in a case of a non-pneumatic tire, the rubber composition for a tire according to an embodiment of the present invention is used for a portion (a portion corresponding to the cap tread 11 constituting a road contact surface of the tread portion 1 in a pneumatic tire) that abuts against a road surface.

In the rubber composition for a tire of an embodiment of the present invention, the rubber component is a diene-based rubber and always contains an isoprene-based rubber. A blended amount of the isoprene-based rubber is 50 mass% or more, preferably 70 to 100 mass%, and more preferably 85 to 100 mass%, per 100 mass% of the diene-based rubber. All the diene-based rubber may be an isoprene-based rubber. Examples of the isoprene-based rubber include various natural rubbers and various synthetic polyisoprene rubbers. Among these isoprene-based rubbers, a natural rubber can be particularly suitably used. When a majority of the diene-based rubber is an isoprene-based rubber, it is possible to reduce the environmental load. That is, in a case of the natural rubber, dependency on petroleum can be reduced and the environmental load can be reduced in that a synthetic rubber derived from petroleum is not used. Further, as compared with a rubber composition mainly composed of a synthetic rubber in the related art (for example, styrene-butadiene rubber), a rubber composition mainly composed of a natural rubber is easily used as a reclaimed rubber after disposal, and thus, the environmental load can be reduced also from the viewpoint of recyclability. On the other hand, with regard to synthetic polyisoprene rubber, a technique for producing isoprene from sugar of biomass (biological resource) has been developed in recent years, and by using synthetic polyisoprene rubber obtained by polymerizing such isoprene, it is possible to reduce dependency on petroleum to reduce the environmental load.

The rubber composition for a tire of an embodiment of the present invention can contain an additional diene-based rubber in addition to the isoprene-based rubber described above. As such an additional diene-based rubber, a rubber that can be typically used in a rubber composition for a tire can be used. Examples thereof include butadiene rubber and styrene-butadiene rubber. These additional diene-based rubbers may be used alone or as a discretionary blend. However, even in a case where the additional diene-based rubber is blended, a blended amount thereof is 50 mass% or less, preferably 20 mass% or less, and more preferably 15 mass% or less, per 100 mass% of the diene-based rubber. That is, when the ratio of the additional diene-based rubber (particularly, synthetic rubber) is high, a proportion of regenerable raw materials or recycled raw materials is low, and the effect of reducing the environmental load cannot be sufficiently obtained. Specifically, when the blended amount of the additional diene-based rubber exceeds 50 mass% (that is, when the blending amount of the isoprene-based rubber is less than 50 mass%), the ratio of the isoprene-based rubber contributing to the reduction in environmental load is reduced, and thus the effect of reducing the environmental load cannot be sufficiently obtained.

In the rubber composition for a tire, the thermoplastic resin is always blended in the diene-based rubber. In particular, as the thermoplastic resin, a resin is used which is composed of a unit derived from an aliphatic monomer and/or a unit derived from an aromatic monomer, and has an aromatic proton content proportion of 0% or more and less than 5%, a softening point of 80°C or higher and 160°C or lower, and a number average molecular weight Mn of 1100 or less. When a relatively large amount of a specific thermoplastic resin having good compatibility is blended in the diene-based rubber containing 50 mass% or more of the isoprene-based rubber, the tensile strength at break (wear resistance) and tan$\delta$ at 0°C (wet performance) can be improved to the same levels as those of a rubber composition containing a styrene-butadiene rubber as a main component.

The thermoplastic resin may be composed of only a unit derived from an aliphatic monomer, only a unit derived from an aromatic monomer, or both a unit derived from an aliphatic monomer and a unit derived from an aromatic monomer, as long as the above-described properties are satisfied. Examples of the unit derived from an aliphatic monomer include a unit derived from a monomer that is an aliphatic compound or an alicyclic compound. The aliphatic compound may be linear or branched, and may be saturated or unsaturated. The alicyclic compound is a compound having a ring without aromaticity, and may be saturated or unsaturated. In addition, the alicyclic compound may have any aliphatic compound bonded to a side chain thereof.

The aromatic proton content proportion of the thermoplastic resin is 0% or more and less than 5%, preferably 0% or more and 4% or less, and more preferably 1% or more and 3% or less. When the aromatic proton content proportion is less than 5%, the compatibility with the isoprene-based rubber can be further enhanced, and the balance between wear resistance and low rolling resistance can be made excellent, and particularly the low rolling resistance can be improved. The aromatic proton content proportion of the thermoplastic resin can be adjusted by adjusting the ratio of the unit derived from an aliphatic monomer and the unit derived from an aromatic monomer or by hydrogenating the thermoplastic resin. In the present specification, the aromatic proton content proportion is a proportion of the content of aromatic protons to the total of the content of aromatic protons and the content of aliphatic protons contained in the thermoplastic resin, and can be determined from a measurement result of $^1$H-NMR spectrum.

The softening point of the thermoplastic resin is 80°C or higher and 160°C or lower, preferably from 85°C to 145°C, and more preferably from 90°C to 130°C. When the softening point of the thermoplastic resin is lower than 80°C, the effect of improving the wear resistance and the wet performance is reduced. When the softening point of the thermoplastic resin exceeds 160°C, the compatibility with the isoprene-based rubber deteriorates. In the present specification, the softening point of the thermoplastic resin can be measured in accordance with JIS K6220-1 (ring and ball method).

The thermoplastic resin has a number average molecular weight Mn of 1100 or less, and preferably 200 or more and 1100 or less. When the number average molecular weight Mn exceeds 1100, the low rolling resistance deteriorates. In the present specification, the number average molecular weight Mn of the thermoplastic resin can be determined as a value measured by gel permeation chromatography (GPC) based on calibration with polystyrene.

Examples of the thermoplastic resin having the above-described properties include C5-based petroleum resins (aliphatic petroleum resins obtained by polymerizing a fraction such as isoprene, 1,3-pentadiene, cyclopentadiene, methylbutene, or pentene), C9-based petroleum resins (aromatic petroleum resins obtained by polymerizing a fraction such as $\alpha$-methylstyrene, o-vinyltoluene, m-vinyltoluene, or p-vinyltoluene), C5/C9-based resins, dicyclopentadiene-based resins (DCPD-based resins), C9/dicyclopentadiene-based resins (C9/DCPD-based resins), and C5/dicyclopentadiene-based resins (C5/DCPD-based resins), as well as hydrogenated C9-based petroleum resins, hydrogenated C5/C9-based petroleum resins, hydrogenated dicyclopentadiene-based resins (hydrogenated DCPD-based resins), hydrogenated C5/dicyclopentadiene-based resins (C5/hydrogenated DCPD-based resins), and hydrogenated C9/dicyclopentadiene-based resins (C9/hydrogenated DCPD-based resins) obtained by hydrogenating the above-described resins. Among them, hydrogenated C9-based petroleum resins, hydrogenated C5/C9-based petroleum resins, hydrogenated DCPD-based resins, and hydrogenated C9/DCPD-based resins are preferred.

The rubber composition for a tire may contain, in addition to the thermoplastic resin satisfying all the requirements of the aromatic proton content, the softening point, and the number average molecular weight Mn described above, an additional thermoplastic resin different from the thermoplastic resin. The additional thermoplastic resin different therefrom refers to: a thermoplastic resin that does not satisfy at least one requirement selected from the aromatic proton content, the softening point, and the number average molecular weight Mn; and/or a thermoplastic resin that is different in the type, content proportion, or presence or absence of hydrogenation of the unit derived from an aliphatic monomer and/or the unit derived from an aromatic monomer. The number of the additional thermoplastic resins may be one or two or more. When the additional thermoplastic resin is contained, the weighted average of the aromatic proton content proportion of the thermoplastic resin and the aromatic proton content proportion of the additional thermoplastic resin is preferably more than 0% and less than 5%. That is, when the aromatic proton content proportions of the thermoplastic resin and the additional thermoplastic resin are represented by H1% and H2%, respectively, and the contents thereof are represented by m1 mass% and m2 mass%, respectively, a weighted average HAr of the aromatic proton content proportions determined by the following calculation formula is more than 0% and less than 5%.

$$HAr = (H1 \times m1 + H2 \times m2)/(m1 + m2)$$

Note that also in a case where the number of thermoplastic resins is three or more, the weighted average value can be determined in the same manner. The weighted average HAr of the aromatic proton content proportions is preferably more than 0% and 4% or less, and more preferably 1% or more and 3% or less.

In the rubber composition for a tire, a difference $Tg_B - Tg_A$ between a glass transition temperature $Tg_A$ of the diene-based rubber and a glass transition temperature $Tg_B$ of the thermoplastic resin preferably satisfies a relationship of 120°C or more and 200°C or less, more preferably 122°C or more and 180°C or less, and even more preferably 124°C or more and 160°C or less. Satisfying such a relationship is advantageous in improving the wear resistance and the wet performance. When the difference $Tg_B - Tg_A$ is 120°C or more, the wet performance is maintained and improved. When the difference $Tg_B - Tg_A$ is 200°C or less, the compatibility is secured and the wear resistance is maintained and improved. Note that the glass transition temperature $Tg_A$ and $Tg_B$ can be measured by a differential scanning calorimetry (DSC).

The thermoplastic resin is blended in an amount of 16 parts by mass or more and 200 parts by mass or less, preferably 25 parts by mass or more and 150 parts by mass or less, and more preferably 50 parts by mass or more and 100 parts by mass or less, with respect to 100 parts by mass of the diene-based rubber. When the thermoplastic resin is blended in an amount of 16 parts by mass or more, the tensile strength at break and tanδ at 0°C of the rubber composition can be made favorable, and the wear resistance and the wet performance of the pneumatic tire can be improved. When the blended amount of the thermoplastic resin is more than 200 parts by mass, the wear resistance is reduced and the low rolling resistance deteriorates.

In the rubber composition for a tire, blending silica in the diene-based rubber improves the wet performance and the low rolling resistance. A blended amount of the silica is 50 parts by mass or more and 150 parts by mass or less, preferably 60 parts by mass or more and 135 parts by mass or less, and more preferably 70 parts by mass or more and 120 parts by mass or less, with respect to 100 parts by mass of the diene-based rubber. When the blended amount of the silica is less than 50 parts by mass, a sufficient effect of improving wet performance and low rolling resistance cannot be achieved. When the blended amount of the silica exceeds 150 parts by mass, the dispersibility deteriorates and the tensile strength at break is reduced, resulting in poor wear resistance.

The silica can be silica ordinarily used in rubber compositions for tires, such as wet silica, dry silica, or surface-treated silica. The silica may be appropriately selected from commercially available products and used. Silica obtained by a normal manufacturing method can also be used.

The rubber composition of an embodiment of the present invention may contain a filler other than the silica. Examples of another filler include materials typically used for a rubber composition for a tire, such as carbon black, clay, talc, calcium carbonate, mica, and aluminum hydroxide. In particular, it is preferable to use carbon black in combination. By using carbon black in combination, the wear resistance can be improved. In a case where carbon black is used in combination, the blended amount thereof is not particularly limited, and can be set to, for example, from 5 parts by mass to 20 parts by mass with respect to 100 parts by mass of the diene-based rubber.

In the rubber composition for a tire of the present invention, a silane coupling agent is preferably used in combination when the silica described above is blended. By blending the silane coupling agent, the dispersibility of the silica in the diene-based rubber can be improved. The type of silane coupling agent is not particularly limited as long as it can be used in a rubber composition containing silica, and examples thereof include sulfur-containing silane coupling agents such as bis-(3-triethoxysilylpropyl)tetrasulfide, bis(3-triethoxysilylpropyl)disulfide, 3-trimethoxysilylpropylbenzothiazole tetrasulfide, γ-mercaptopropyltriethoxysilane, and 3-octanoylthiopropyltriethoxysilane. Among these, those having a tetrasulfide bond in the molecule can be particularly suitably used. A blended amount of the silane coupling agent is preferably less than 10 mass%, and more preferably from 6 mass% to 9 mass% with respect to the blended amount of silica. When the blended amount of the silane coupling agent is 10 mass% or more with respect to the blended amount of the silica, the silane coupling agent condenses, and thus desired hardness and strength of the rubber composition cannot be achieved.

The rubber composition for a tire preferably contains a glycerol monofatty acid ester derived from a fatty acid having 8 to 24 carbon atoms, and this improves the dispersibility of silica and enables the low rolling resistance and the wet performance to be excellent. Specific examples of the fatty acid having 8 to 24 carbon atoms include straight-chain fatty acids, such as caprylic acid, pelargonic acid, capric acid, lauric acid, myristic acid, pentadecylic acid, palmitic acid, margaric acid, stearic acid, oleic acid, arachidic acid, behenic acid, lignoceric acid, linoleic acid, linolenic acid, and erucic acid, and stearic acid and oleic acid are preferable. One type of the glycerol monofatty acid ester may be used, or two or more types of the glycerol monofatty acid esters may be used in combination. It is presumed that the glycerol monofatty acid ester acts as a lubricant for the diene-based rubber to reduce the viscosity of the rubber composition, and that the hydroxy group derived from glycerin is adsorbed to a silanol group on the surface of silica, and a carbon chain derived from the fatty acid acts as a hydrophobic site to increase the dispersibility of silica. In addition, this also exerts the effect of improving the low rolling resistance without decreasing hardness. In addition, when the carbon chain of the glycerol monofatty acid ester is unsaturated, the unsaturated bond serves as a reaction site for sulfur. Thus, the crosslinking density of the polymer is relatively reduced to suppress excessive crosslinking, which can improve tensile strength at break and elongation at break.

The glycerol monofatty acid ester derived from a fatty acid having 8 to 24 carbon atoms is preferably blended in an amount of 0.2 mass% to 10 mass%, more preferably 0.4 mass% to 7 mass%, and even more preferably 0.6 mass% to 4 mass%, with respect to the blended amount of silica. When the glycerol monofatty acid ester is blended in an amount of 0.2 mass% or more, the dispersibility of silica is maintained and improved. When the blended amount is 10 mass% or less, the tensile strength at break and the rubber hardness can be maintained.

The rubber composition for a tire preferably contains an oil. By blending the oil in this manner, mixing processability can be improved. In a case of blending the oil, the proportion of the oil to the total amount of plasticizer components (that is, a total of the thermoplastic resin, the oil, and any other plasticizer component) contained in the rubber composition for a tire of an embodiment of the present invention is preferably from 20 mass% to 60 mass%, and more preferably from 30 mass% to 50 mass%.

In the rubber composition according to an embodiment of the present invention, an additional compounding agent other than those above may also be added. Examples of the additional compounding agent include various compounding agents typically used in rubber compositions for a tire, such as vulcanizing or crosslinking agents, vulcanization accelerators, anti-aging agents, and liquid polymers. These compounding agents can be blended in known typical blended amounts as long as the object of the present invention is not hindered. As a kneader, a typical kneader for a rubber, such as a Banbury mixer, a kneader, or a roller, may be used.

The present invention will further be described below by way of Examples, but the scope of the present invention is not limited to the Examples.

Example

Rubber compositions for a tire (Standard Example 1, Comparative Examples 1 to 8, and Examples 1 to 11) having the formulations shown in Tables 2 and 3, which had the common compounding agent formulation shown in Table 4, were prepared using thermoplastic resins 1 to 8 shown in Table 1. The production method was as follows: blending ingredients other than a vulcanization accelerator and sulfur were weighed and kneaded in a 1.8 L sealed Banbury mixer for 5 minutes. Then, a master batch was discharged and cooled at room temperature. Thereafter, the master batch was added into the 1.8 L sealed Banbury mixer, and the vulcanization accelerator and sulfur were added and mixed for 2 minutes. Thus, each of the rubber compositions for a tire was obtained.

Note that Tables 2 and 3 show the weighted average glass transition temperature $Tg_A$ of the diene-based rubber [unit: °C], the weighted average glass transition temperature $Tg_B$ of the thermoplastic resin [unit: °C], and the difference $Tg_B - Tg_A$ [unit: °C]. The weighted average value of the aromatic proton content proportion [unit: %] of the thermoplastic resin is shown in the column of "Aromatic proton content proportion". Note that when the diene-based rubber or the thermoplastic resin was blended alone, the weighted average value of the diene-based rubber or the thermoplastic resin alone was described.

By using each of the obtained rubber compositions for a tire, wear resistance, wet performance, and low rolling resistance were evaluated by the following methods.

Wear Resistance

Each of the rubber compositions for a tire was used and vulcanized in a mold having a predetermined shape (inner dimension: length of 150 mm, width of 150 mm, thickness of 2 mm) at 170°C for 10 minutes to prepare a vulcanized rubber test piece. The vulcanized rubber test piece was used to prepare a dumbbell-shaped JIS No. 3 test piece in accordance with JIS K 6251. This test piece was used to perform tensile testing at room temperature (23°C) and at a pulling speed of 500 mm/min, and the tensile strength at break was measured. The evaluation results are shown on the "Wear resistance" rows of Tables 2 to 3 as index values with a value of Standard Example 1 being 100. As this index value is larger, it is meant that the tensile strength at break is larger, and the wear resistance is superior.

Wet Performance and Low Rolling Resistance

Each of the rubber compositions for a tire was used and vulcanized in a mold having a predetermined shape (inner dimension: length of 150 mm, width of 150 mm, thickness of 2 mm) at 170°C for 10 minutes to prepare a vulcanized rubber test piece. This vulcanized rubber test piece was used to measure dynamic visco-elasticity using a viscoelastic spectrometer available from Toyo Seiki Seisaku-sho, Ltd. under conditions of an initial strain of 10%, an amplitude of ±2%, and a frequency of 20 Hz, and tanδ at each of 0°C and 60°C was determined. The results for the tanδ at 0°C are expressed as an index value based on the value of the Standard Example 1 set at 100 and are presented in the "Wet performance" rows of Tables 2 to 3. A larger index value indicates a superior wet performance. Each of the results for the tanδ at 60°C was obtained by calculating a reciprocal thereof and is expressed as an index value based on the value of the Standard Example 1 set at 100, and is presented in the "Low rolling resistance" row of Tables 2 to 3. Note that with regard to the low rolling resistance, when the index value is "102" or more, the low rolling resistance is considered to be improved.

Table 1

| | | Thermoplastic resin | | | | | | | |
|---|---|---|---|---|---|---|---|---|---|
| | | 1 | 2 | 3 | 4 | 5 | 6 | 7 | 8 |
| Aromatic proton content proportion | % | 0 | 2 | 4 | 15 | 48 | 6 | 2 | 12 |
| Softening Point | °C | 100 | 125 | 96 | 109 | 50 | 150 | 107 | 125 |
| Glass transition temperature | °C | 58 | 74 | 47 | 41 | -28 | 95 | 49 | 80 |
| Number average molecular weight Mn | - | 300 | 500 | 1100 | 400 | 100 | 800 | 1300 | 900 |

Types of raw materials used indicated in Table 1 are described below.

• Thermoplastic resin 1: Hydrogenated DCPD resin, HC-100 available from Hanwha

• Thermoplastic resin 2: Hydrogenated DCPD/C9 resin, T-REZ HA125 available from ENEOS Corporation

• Thermoplastic resin 3: C5/C9 resin, S-2100 available from Henan Binder

• Thermoplastic resin 4: C9 resin, RT95B available from Shanghai Xuanda Manufacturing Co., Ltd.

• Thermoplastic resin 5: Coumarone indene resin, Novares C10 available from Rutgers Chemicals

• Thermoplastic resin 6: Terpene/phenol/styrene resin, Sylvatraxx 5216 available from Kraton Corporation

• Thermoplastic resin 7: Maleic acid-modified rosin/C9 resin, Haritac AQ-90A available from Harima Chemicals Group, Inc.

• Thermoplastic resin 8: Aromatic modified terpene resin, YS Resin TO-125, available from Yasuhara Chemical Co., Ltd.

Table 2

| | | Standard Example 1 | Comparative Example | | | | | | | |
|---|---|---|---|---|---|---|---|---|---|---|---|
| | | | 1 | 2 | 3 | 4 | 5 | 6 | 7 | 8 |
| NR | Parts by mass | 90 | 90 | 90 | 90 | 90 | 90 | 90 | 90 | 40 |
| SBR | Parts by mass | 10 | 10 | 10 | 10 | 10 | 10 | 10 | 10 | 60 |
| Silica | Parts by mass | 90 | 90 | 90 | 90 | 90 | 90 | 90 | 40 | 90 |
| Thermoplastic resin 1 | Parts by mass | | 10 | 250 | | | | | 30 | 30 |
| Thermoplastic resin-2 | Parts by mass | | | | | | | | | |
| Thermoplastic resin-3 | Parts by mass | | | | | | | | | |
| Thermoplastic resin-4 | Parts by mass | | | | 30 | | | | | |
| Thermoplastic resin-5 | Parts by mass | | | | | 30 | | | | |
| Thermoplastic resin-6 | Parts by mass | | | | | | 30 | | | |
| Thermoplastic resin-7 | Parts by mass | | | | | | | 30 | | |
| Thermoplastic resin-8 | Parts by mass | | | | | | | | | |
| Coupling agent | Parts by mass | 9 | 9 | 9 | 9 | 9 | 9 | 9 | 5 | 9 |
| Oil | Parts by mass | 50 | 40 | 0 | 20 | 20 | 20 | 20 | 20 | 20 |
| Glycerol monofatty acid ester | Parts by mass | 0 | 0 | 0 | 0 | 0 | 0 | 0 | 0 | 0 |
| $Tg_A$ of diene-based rubber | °C | -74 | -74 | -74 | -74 | -74 | -74 | -74 | -74 | -67 |
| $Tg_B$ of resin | °C | - | 58 | 58 | 41 | -28 | 95 | 49 | 58 | 58 |
| $Tg_B$ - $Tg_A$ | °C | - | 132 | 132 | 115 | 46 | 169 | 123 | 132 | 125 |
| Aromatic proton content proportion | % | - | 0 | 0 | 15 | 48 | 6 | 2 | 0 | 0 |
| Wear Resistance | Index value | 100 | 100 | 95 | 100 | 98 | 102 | 105 | 100 | 95 |
| Wet performance | Index value | 100 | 100 | 115 | 102 | 102 | 110 | 105 | 98 | 90 |
| Low rolling resistance | Index value | 100 | 100 | 90 | 100 | 95 | 98 | 98 | 105 | 98 |

Table 3

| | | Example | | | | | | | | | | |
|---|---|---|---|---|---|---|---|---|---|---|---|---|
| | | 1 | 2 | 3 | 4 | 5 | 6 | 7 | 8 | 9 | 10 | 11 |
| NR | Parts by mass | 90 | 90 | 100 | 90 | 90 | 90 | 90 | 90 | 90 | 90 | 90 |
| SBR | Parts by mass | 10 | 10 | | 10 | 10 | 10 | 10 | 10 | 10 | 10 | 10 |
| Silica | Parts by mass | 90 | 90 | 90 | 90 | 90 | 90 | 90 | 90 | 90 | 90 | 120 |
| Thermoplastic resin 1 | Parts by mass | 30 | 30 | 30 | 60 | 100 | 150 | 200 | | | 22 | 30 |
| Thermoplastic resin-2 | Parts by mass | | | | | | | | 30 | | | |

(continued)

| | | Example | | | | | | | | | | |
|---|---|---|---|---|---|---|---|---|---|---|---|---|
| | | 1 | 2 | 3 | 4 | 5 | 6 | 7 | 8 | 9 | 10 | 11 |
| Thermoplastic resin-3 | Parts by mass | | | | | | | | | 30 | | |
| Thermoplastic resin-4 | Parts by mass | | | | | | | | | | | |
| Thermoplastic resin-5 | Parts by mass | | | | | | | | | | | |
| Thermoplastic resin-6 | Parts by mass | | | | | | | | | | | |
| Thermoplastic resin-7 | Parts by mass | | | | | | | | | | | |
| Thermoplastic resin-8 | Parts by mass | | | | | | | | | | 8 | |
| Coupling agent | Parts by mass | 9 | 9 | 9 | 9 | 9 | 9 | 9 | 9 | 9 | 9 | 12 |
| Oil | Parts by mass | 20 | 20 | 20 | 0 | 0 | 0 | 0 | 20 | 20 | 20 | 20 |
| Glycerol monofatty acid ester | Parts by mass | 0 | 1 | 1 | 1 | 1 | 1 | 1 | 1 | 1 | 1 | 1 |
| $Tg_A$ of diene-based rubber | °C | -74 | -74 | -75 | -74 | -74 | -74 | -74 | -74 | -74 | -74 | -74 |
| $Tg_B$ of resin | °C | 58 | 58 | 58 | 58 | 58 | 58 | 58 | 74 | 47 | 55 | 58 |
| $Tg_B$ - $Tg_A$ | °C | 132 | 132 | 133 | 132 | 132 | 132 | 132 | 148 | 120 | 129 | 132 |
| Aromatic proton content proportion | % | 0 | 0 | 0 | 0 | 0 | 0 | 0 | 2 | 4 | 4 | 0 |
| Wear Resistance | Index value | 102 | 105 | 105 | 108 | 110 | 108 | 105 | 105 | 105 | 105 | 102 |
| Wet performance | Index value | 102 | 105 | 102 | 150 | 110 | 112 | 115 | 105 | 108 | 112 | 105 |
| Low rolling resistance | Index value | 102 | 105 | 105 | 105 | 104 | 103 | 102 | 104 | 103 | 103 | 102 |

Types of raw materials used in Tables 2 to 3 are described below.

- NR: Natural rubber, TSR 20 (glass transition temperature $Tg_A$: -75°C)

- SBR: Styrene-butadiene rubber, Nipol NS612, available from Zeon Corporation (glass transition temperature Tg: -63°C)

- Silica: ZEOSIL 1165MP, available from Solvay

- Coupling agent: Silane coupling agent, Si 69, available from Evonik Industries AG

- Oil: Extract 4S, available from Showa Shell Sekiyu K.K.

- Glycerol monostearate: Glycerol monofatty acid, available from Sigma-Aldrich Co. LLC.

Table 4

| Common compounding agent formulation | | |
|---|---|---|
| Anti-aging agent | 2.0 | Parts by mass |
| Wax | 2.0 | Parts by mass |
| Sulfur | 1.0 | Parts by mass |
| Vulcanization accelerator | 2.0 | Parts by mass |

Types of raw materials used as indicated in Table 4 are described below.

- Anti-aging agent: VULKANOX 4020, available from Lanxess AG
- Wax: OZOACE-0015A, available from Nippon Seiro Co., Ltd.
- Sulfur: SULFAX 5, available from Tsurumi Chemical Industry Co., Ltd.
- Vulcanization accelerator: NOCCELER TOT-N, available from Ouchi Shinko Chemical Industrial Co., Ltd.

As is clear from Table 3, it was confirmed that as for the rubber compositions for a tire of Examples 1 to 11, wear resistance, wet performance, and low rolling resistance were maintained or improved, and these performances were achieved in a well-balanced manner, relative to Standard Example 1.

As is clear from Table 2, the rubber composition of Comparative Example 1 had a small blended amount of the thermoplastic resin, and thus the low rolling resistance was insufficient and it was impossible to improve wear resistance and wet performance.

The rubber composition of Comparative Example 2 had a large blended amount of the thermoplastic resin, and thus wear resistance and low rolling resistance deteriorated.

The rubber composition of Comparative Example 3 had a high aromatic proton content proportion of the thermoplastic resin, and thus the low rolling resistance was insufficient and it was impossible to improve wear resistance.

The rubber composition of Comparative Example 4 had a high aromatic proton content proportion of the thermoplastic resin and a low softening point, and thus the wear resistance and the low rolling resistance deteriorated.

The rubber composition of Comparative Example 5 had a high aromatic proton content proportion of the thermoplastic resin, and thus the low rolling resistance deteriorated.

The rubber composition of Comparative Example 6 had a high number average molecular weight Mn of the thermoplastic resin, and thus the low rolling resistance deteriorated.

The rubber composition of Comparative Example 7 contained less than 50 parts by mass of silica, and thus had deteriorated wet performance.

The rubber composition of Comparative Example 8 contained less than 50 parts by mass of the natural rubber, and thus had deteriorated wear resistance, wet performance, and low rolling resistance.

The present disclosure includes the following inventions.

Invention [1] A rubber composition for a tire obtained by blending 50 parts by mass or more and 150 parts by mass or less of silica and 16 parts by mass or more and 200 parts by mass or less of a thermoplastic resin with respect to 100 parts by mass of a diene-based rubber containing 50 mass% or more of an isoprene-based rubber, the thermoplastic resin being composed of a unit derived from an aliphatic monomer and/or a unit derived from an aromatic monomer, and the thermoplastic resin having an aromatic proton content proportion of 0% or more and less than 5%, a softening point of 80°C or higher and 160°C or lower, and a number average molecular weight Mn of 1100 or less.

Invention [2] The rubber composition for a tire according to Invention [1], wherein the isoprene-based rubber is a natural rubber.

Invention [3] The rubber composition for a tire according to Invention [1] or [2], wherein a difference ($Tg_B - Tg_A$) between a glass transition temperature $Tg_A$ of the diene-based rubber and a glass transition temperature $Tg_B$ of the thermoplastic resin is 120°C or more and 200°C or less.

Invention [4] The rubber composition for a tire according to any one of [1] to [3], further including a glycerol monofatty acid ester derived from an aliphatic acid having 8 to 24 carbon atoms.

Invention [5] The rubber composition for a tire according to any one of Inventions [1] to [4], wherein the thermoplastic resin is at least one selected from the group consisting of a hydrogenated C9-based petroleum resin, a hydrogenated C5/C9-based petroleum resin, a hydrogenated dicyclopentadiene-based resin, and a hydrogenated C9/dicyclopentadiene-based resin.

Invention [6] The rubber composition for a tire according to any one of Inventions [1] to [5], further including, in addition to the thermoplastic resin, an additional thermoplastic resin different from the thermoplastic resin, wherein a weighted average of an aromatic proton content proportion of the thermoplastic resin and an aromatic proton content proportion of the additional thermoplastic resin is more than 0% and less than 5%.

Reference Signs List

1 Tread portion
2 Sidewall portion
3 Bead portion
4 Carcass layer
5 Bead core
6 Bead filler
7 Belt layer
8 Belt cover layer
10 Tread rubber layer
11 Cap tread
12 Undertread
CL Tire equator

**Claims**

1. A rubber composition for a tire obtained by blending 50 parts by mass or more and 150 parts by mass or less of silica and 16 parts by mass or more and 200 parts by mass or less of a thermoplastic resin with respect to 100 parts by mass of a diene-based rubber containing 50 mass% or more of an isoprene-based rubber, the thermoplastic resin being composed of a unit derived from an aliphatic monomer and/or a unit derived from an aromatic monomer, and the thermoplastic resin having an aromatic proton content proportion of 0% or more and less than 5%, a softening point of 80°C or higher and 160°C or lower, and a number average molecular weight Mn of 1100 or less.

2. The rubber composition for a tire according to claim 1, wherein the isoprene-based rubber is a natural rubber.

3. The rubber composition for a tire according to claim 1 or 2, wherein a difference ($Tg_B$ - $Tg_A$) between a glass transition temperature $Tg_A$ of the diene-based rubber and a glass transition temperature $Tg_B$ of the thermoplastic resin is 120°C or more and 200°C or less.
The relationship is satisfied

4. The rubber composition for a tire according to any one of claims 1 to 3, further comprising a glycerol monofatty acid ester derived from an aliphatic acid having 8 to 24 carbon atoms.

5. The rubber composition for a tire according to any one of claims 1 to 4, wherein the thermoplastic resin is at least one selected from the group consisting of a hydrogenated C9-based petroleum resin, a hydrogenated C5/C9-based petroleum resin, a hydrogenated dicyclopentadiene-based resin, and a hydrogenated C9/dicyclopentadiene-based resin.

6. The rubber composition for a tire according to any one of claims 1 to 4, further comprising, in addition to the thermoplastic resin, an additional thermoplastic resin different from the thermoplastic resin, wherein a weighted average of an aromatic proton content proportion of the thermoplastic resin and an aromatic proton content proportion of the additional thermoplastic resin is more than 0% and less than 5%.

FIG. 1

EP 4 656 678 A1

## INTERNATIONAL SEARCH REPORT

| International application No. |
| --- |
| **PCT/JP2024/008634** |

### A. CLASSIFICATION OF SUBJECT MATTER

*C08L 9/00*(2006.01)i; *B60C 1/00*(2006.01)i; *C08K 3/36*(2006.01)i; *C08L 7/00*(2006.01)i; *C08L 57/02*(2006.01)i; *C08L 101/02*(2006.01)i

FI: C08L9/00; C08K3/36; C08L57/02; C08L101/02; C08L7/00; B60C1/00 A

According to International Patent Classification (IPC) or to both national classification and IPC

### B. FIELDS SEARCHED

Minimum documentation searched (classification system followed by classification symbols)

C08L9/00; B60C1/00; C08K3/36; C08L7/00; C08L57/02; C08L101/02

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| X | JP 2019-006880 A (BRIDGESTONE CORPORATION) 17 January 2019 (2019-01-17) claims, tables 2-4, examples 2-5, 2-7, 3-3, 4-3, paragraph [0060], etc. | 1-6 |
| X | WO 2022/249637 A1 (BRIDGESTONE CORPORATION) 01 December 2022 (2022-12-01) claims, tables 1, 3, examples 5-6, paragraph [0162], etc. | 1-4, 6 |
| X | WO 2022/249636 A1 (BRIDGESTONE CORPORATION) 01 December 2022 (2022-12-01) claims, tables 1, 3, examples 2-3, paragraph [0162], etc. | 1-4, 6 |
| A | JP 2013-181165 A (MITSUBISHI CHEMICAL CORPORATION) 12 September 2013 (2013-09-12) paragraph [0090] | 1-6 |
| A | JP 2022-128013 A (IDEMITSU UNITECH CO., LTD.) 01 September 2022 (2022-09-01) paragraph [0073] | 1-6 |

☑ Further documents are listed in the continuation of Box C.   ☑ See patent family annex.

| | | |
| --- | --- | --- |
| * | Special categories of cited documents: | |
| "A" | document defining the general state of the art which is not considered to be of particular relevance | |
| "D" | document cited by the applicant in the international application | |
| "E" | earlier application or patent but published on or after the international filing date | |
| "L" | document which may throw doubts on priority claim(s) or which is cited to establish the publication date of another citation or other special reason (as specified) | |
| "O" | document referring to an oral disclosure, use, exhibition or other means | |
| "P" | document published prior to the international filing date but later than the priority date claimed | |

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
| --- | --- |
| **09 April 2024** | **23 April 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

EP 4 656 678 A1

**INTERNATIONAL SEARCH REPORT**

International application No.

**PCT/JP2024/008634**

### C. DOCUMENTS CONSIDERED TO BE RELEVANT

| Category* | Citation of document, with indication, where appropriate, of the relevant passages | Relevant to claim No. |
|---|---|---|
| A | JP 2017-088897 A (SUMITOMO RUBBER INDUSTRIES, LTD.) 25 May 2017 (2017-05-25) paragraph [0151] | 1-6 |

## INTERNATIONAL SEARCH REPORT
### Information on patent family members

International application No.

**PCT/JP2024/008634**

| Patent document cited in search report | | | Publication date (day/month/year) | Patent family member(s) | | | Publication date (day/month/year) |
|---|---|---|---|---|---|---|---|
| JP | 2019-006880 | A | 17 January 2019 | (Family: none) | | | |
| WO | 2022/249637 | A1 | 01 December 2022 | (Family: none) | | | |
| WO | 2022/249636 | A1 | 01 December 2022 | CN | 117396553 | A | |
| JP | 2013-181165 | A | 12 September 2013 | (Family: none) | | | |
| JP | 2022-128013 | A | 01 September 2022 | (Family: none) | | | |
| JP | 2017-088897 | A | 25 May 2017 | (Family: none) | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP 6092986 B